# EUROPÄISCHE PATENTSCHRIFT

(11) **EP 2 195 376 B1**
(45) Veröffentlichungstag und Bekanntmachung des Hinweises auf die Patenterteilung: **29.05.2013**
(21) Anmeldenummer: 08804855.8
(22) Anmeldetag: 29.09.2008
(51) Int. Cl.: C08L 7/00, C08L 11/00, C08L 15/00, C08L 23/16, B60S 1/38

(54) **GUMMIMATERIAL EINES WISCHBLATTES FÜR SCHEIBENWISCHER UND VERFAHREN ZU DESSEN HERSTELLUNG**
RUBBER MATERIAL OF A WIPER BLADE FOR WINDSHIELD WIPERS AND PROCESS FOR PRODUCTION THEREOF
MATÉRIAU CAOUTCHOUTEUX D'UNE RACLETTE D'ESSUIE-GLACE, ET SON PROCÉDÉ DE PRODUCTION

(30) Priorität: 01.10.2007 DE 102007047079
(43) Veröffentlichungstag der Anmeldung: 16.06.2010
(73) Patentinhaber: Robert Bosch GmbH, 70442 Stuttgart (DE)
(72) Erfinder: PIETERS, Eric, NL-6369 AK Simpelveld (NL); LAY, Reiner, 52072 Aachen (DE); PARTON, Hilde, B-3052 Oud-heverlee (Blanden) (BE)
(86) Internationale Anmeldenummer: PCT/EP2008/062993
(87) Internationale Veröffentlichungsnummer: WO 2009/047153

(56) Entgegenhaltungen:
- EP-A- 0 287 140
- WO-A-01/90236
- WO-A-94/05726
- DE-A1- 19 615 421
- DE-A1- 19 944 274
- US-A- 5 118 546

## Beschreibung

Die Erfindung bezieht sich auf ein Gummimaterial eines Wischblattes für Scheibenwischer, ein Wischblatt dieses enthaltend sowie auf ein Verfahren zu dessen Herstellung nach dem Oberbegriff der unabhängigen Patentansprüche.

### Stand der Technik

Wischgummimaterialien für Scheibenwischer sind einer Vielzahl physikalischer und mechanischer Anforderungen unterworfen. So müssen diese nicht nur ein befriedigendes Wischbild beispielsweise auf einer zu reinigenden Glasoberfläche zeigen, sondern darüber hinaus abriebfest und UV- bzw. ozonbeständig sein.

So sind beispielsweise aus der JP 358 758 7 B2 Wischblätter bekannt, die auf der Basis einer Mischung von Naturkautschuk und Chloropren zusammen mit Füllstoffen und Verarbeitungshilfsstoffen ausgeführt sind. Naturkautschuk und Chloropren weisen jedoch unterschiedliche Polaritäten auf. So ist Naturkautschuk verhältnismäßig unpolar, wohingegen Chloropren ein polares Verhalten zeigt.

Diese Differenz bezüglich der Polarität beider Gummikomponenten erschwert nicht nur die Vermischung beider Gummimaterialien im Rahmen der Herstellung des Wischgummimaterials, sondern kann auch zu einer Migration der Verarbeitungshilfsstoffe, wie beispielsweise Vulkanisationschemikalien wie Beschleunigern oder Retardern, oder von Weichmachern und Prozesshilfsstoffen in die polarere Chloroprenphase führen. Die Anreicherung der genannten Substanzen in der Chloroprenphase birgt beispielsweise die Gefahr, dass es bereits in der Rohgummimischung zu einer vorzeitigen Aushärtung kommt, wobei mikroskopische Frühvulkanisate entstehen, die die Wischqualität eines resultierenden Gummimaterials deutlich beeinträchtigen können. Weiterhin kann eine inhomogene Verteilung des Härters in einer Rohgummimischung zu einer lokalen unvollständigen Härtung bzw. zu einer lokalen übermäßigen Aushärtung des Gummisystems führen, was einen nachteiligen Effekt auf die Alterungseigenschaften eines resultierenden Wischgummis haben kann.

Weiterhin ist aus der US-A-5118546 eine Gummimischung zur Herstellung von Reifen bekannt, die SBR oder IR, CR und ENR umfasst. Weiterhin ist aus der WO 01/90236 eine Gummimischung aus BR, CR und NBR zur Herstellung von Handschuhen bekannt. Darüber hinaus ist der WO 94/05726 eine Gummimischung aus NR, ENR und mit einem Acrylat gepropftem NR zur Herstellung von Bändern zu entnehmen. Die EP-A-0287140 offenbart eine weitere Gummimischung aus EPDM, EVA und NBR. Darüber hinaus ist der DE-A-19944274 eine Gummimischung aus einem Gummi auf Dienbasis, einem thermoplastischen Harz und einem kompatibilisierenden Mittel zur Herstellung von Wischerblättern zu entnehmen. Weiterhin ist der DE-A-19615421 ein Wischerblatt zu entnehmen, das Polychloropren oder eine Mischung aus einem Anteil von mindestens 60 Gewichtsprozent Polychloropren und mindestens einem anderen Elastomer umfasst.

### Offenbarung der Erfindung

Der vorliegenden Erfindung liegt die Aufgabe zugrunde, ein Wischgummimaterial bereitzustellen, das aus einer Mischung mindestens zweier Gummikomponenten hergestellt werden kann und die aus dem Stand der Technik resultierenden Nachteile vermeidet.

### Vorteile der Erfindung

Das Gummimaterial für Wischblätter eines Scheibenwischers sowie das Verfahren zur Herstellung desselben mit den kennzeichnenden Merkmalen der unabhängigen Ansprüche, löst in vorteilhafter Weise die der Erfindung zugrundeliegende Aufgabe. Das erfindungsgemäße Gummimaterial umfasst eine erste und eine zweite Gummikomponente, wobei sich die erste und zweite Gummikomponente hinsichtlich ihrer Polarität unterscheiden. Erfindungsgemäß wird die Gummikomponente geringerer Polarität zumindest teilweise durch ein chemisch funktionalisiertes Derivat ersetzt. Auf diese Weise werden die Polaritäten beider Gummikomponenten angeglichen. Dies führt zu einer guten Mischbarkeit der Gummikomponenten des vorliegenden Gummimaterials und beugt einer Migration von Füllstoffen oder Verarbeitungshilfsstoffen während der Durchmischung des Gummimaterials im Rohzustand vor. Ein resultierendes Wischblatt zeigt somit ein sehr gutes Wischverhalten und zeichnet sich durch eine einfache Herstellbarkeit aus.

Weitere vorteilhafte Ausführungsformen der vorliegenden Erfindung ergeben sich aus den Unteransprüchen.

Ist z.B. die erste Gummikomponente mit geringer Polarität ein Polymerisat eines Butadienderivats, wie beispielsweise Naturkautschuk (NR), Butadiengummi (BR), Styrolbutadiengummi (SBR), Isobuthylisoprengummi (IIR) oder Isoprengummi (IR), so wird dieses vorteilhaft zumindest teilweise durch sein funktionalisiertes Derivat substituiert. So kann beispielsweise N R zumindest teilweise durch ein epoxidiertes Naturkautschuk (ENR) ersetzt werden. Weiterhin kann IR als erste Gummikomponente geringer Polarität zumindest teilweise durch ein epoxidiertes IR ersetzt werden.

Ist die erste Gummikomponente geringer Polarität aus BR, SBR oder IIR gebildet, so können diese jeweils durch ein halogeniertes, alkoxiliertes oder mit tertiären Aminfunktionen versehenes Derivat ersetzt werden. Auf diese Weise kann eine Angleichung der Polarität dieser auf einem Butadienderviat beruhenden Gummikomponenten an polare weitere Gummikomponenten wie Chloropren oder Polyvinylchlorid erreicht werden. Auch der Ersatz von BR als erster Gummikomponente geringer Polarität durch ein Copolymer von Butadien mit Acrylnitril führt zu einer Anhebung der Polarität der ersten Gummikomponente.

Weiterhin ist von Vorteil, wenn Ethylen-Propylen-Dien-Terpolymer (EPDM) oder Ethylen-Propylen-Copolymer (EPM) als erste Gummikomponente mit geringer Polarität durch ein alkoxiliertes oder mit tertiären Aminfunktionen bzw. Nitrilgruppen versehenes Derivat ersetzt wird. Dies ist insbesondere dann vorteilhaft, wenn als zweite Gummikomponente mit einer hohen Polarität ein hydriertes Butadiengummi (HNBR), ein Ethylvinylacetat (EVM) ein chlorsulfoniertes Polyethylen (CSM) oder ein chloriertes Polyethylen (CM) zum Einsatz kommt. Auch in diesem Fall kommt es zu einer Angleichung der Polaritäten beider Gummikomponenten, verbunden mit den bereits geschilderten Vorteilen.

In einer besonders vorteilhaften Ausführungsform der vorliegenden Erfindung ist die erste Gummikomponente geringer Polarität durch ein Derivat ersetzt, das seinerseits nur teilweise auf chemischem Wege funktionalisiert wurde. Dies beruht auf der Erkenntnis, dass Gummiderivate, die eine hohe Zahl an funktionellen Gruppen innerhalb des Moleküles aufweisen, zu einer übermäßigen Aushärtung des gesamten Systems führen können und somit zu einer unbefriedigenden Wischqualität des resultierenden Wischgummis.

### Kurze Beschreibung der Zeichnungen

Ein Ausführungsbeispiel ist in der Figur verdeutlicht und in der nachfolgenden Beschreibung näher beschrieben. Die einzige Figur zeigt eine schematische Schnittdarstellung eines Wischgummiprofils gemäß einer ersten Ausführungsform der vorliegenden Erfindung.

### Ausführungsformen der Erfindung

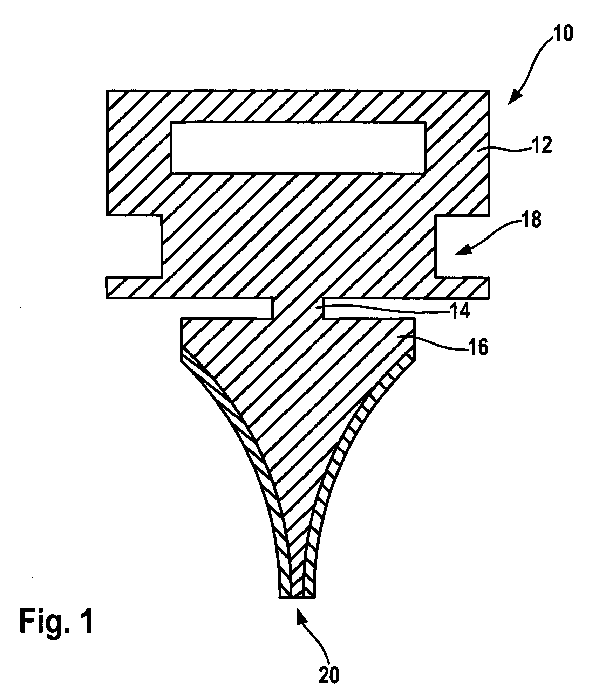

In Figur 1 ist ein Wischgummiprofil 10 für Wischblätter eines Scheibenwischers dargestellt. Dieses ist im Wesentlichen streifenförmig ausgeführt und umfasst ein verbreitertes Kopfteil 12, das über einen Umlegesteg 14 mit einem Keil 16 verbunden ist. Das Kopfteil 12 weist Aussparungen 18 für die Aufnahme einer nicht dargestellten außen liegenden Federschiene auf. Der Keil 16 verjüngt sich an seiner dem Kopfteil 12 abgewandten und einer zu reinigenden Glasfläche zugewandten Seite zu einer Wischlippe 20. Das Wischgummiprofil 10 kann in seinen Kompartimenten Kopfteil 12, Keil 16 und Umlegesteg 14 einstückig aus ein und demselben Gummimaterial ausgeführt sein. Es ist jedoch auch möglich, den Kopf 12 und den Keil 16 aus verschiedenen Gummimaterialien auszuführen, da sich das mechanische Anforderungsprofil für beide Profilkomponenten deutlich unterscheidet.

Um eine gute Wischqualität des resultierenden Wischgummiprofils 10 zu erreichen, ist dies vorzugsweise aus einer Mischung mindestens zweier Gummikomponenten ausgeführt. So wird beispielsweise als erste Gummikomponente Naturkautschuk gewählt und als zweite Gummikomponente Chloropren (CR), Polyvinylchlorid (PVC) oder NBR/PVC-Verschnitte. Um die Polaritätsdifferenz zwischen Naturkautschuk und Chloropren bzw. PVC oder NBR/PVC zu verringern, wird Naturkautschuk zumindest teilweise durch ein epoxidiertes Naturkautschuk ENR ersetzt, wobei das verwendete ENR einen Epoxidierungsgrad von beispielsweise 15 bis 50 %, vorzugsweise von 15 bis 25% aufweist.

In gleicher Weise kann ein Isoprengummi als erste Gummikomponente geringer Polarität in einer Gummimischung mit Chloropren oder PVC durch dessen epoxidiertes Derivat zumindest teilweise ersetzt werden.

Werden als erste Gummikomponente EPDM, EPM, BR oder IIR eingesetzt, so können diese zur Angleichung ihrer Polarität mit der Polarität einer zweiten, deutlich polareren Gummikomponente, wie beispielsweise HNBR, EVM, CM, CSM, CR oder PVC zumindest teilweise durch ein funktionalisiertes Derivat ersetzt werden. Als funktionalisierte Derivate werden insbesondere die zumindest teilweise halogenierten, die zumindest teilweise alkoxilierten oder aryloxilierten Derivate verstanden, aber auch Derivate, die zumindest teilweise mit tertiären Amingruppen oder Nitrilgruppen substituiert sind.

Nachfolgend sind exemplarisch Ausführungsbeispiele für beispielhafte Gummimischungen angegeben. Die Angaben in Gewichtsprozent entsprechen dem Anteil des entsprechenden Elastomers am Gesamtgehalt an Elastomeren in der Gummimischung:

| | Elastomer 1 (unpolar) | Funktionalisiertes polares Derivat von Elastomer 1 | Elastomer 2 (polar) |
|---|---|---|---|
| Bsp.1 | NR | ENR | CR |
| | 30 Gew.%: | 30 Gew.%: | 40 Gew.%: |
| Bsp.2 | NR | ENR | CR |
| | 40 Gew.%: | 20 Gew.% | 40 Gew%: |
| Bsp.3 | NR | ENR | CR |
| | 30 Gew.%: | 20 Gew%: | 50 Gew%: |
| Bsp.4 | NR | ENR | NBR/PVC |
| | 40 Gew.% | 20 Gew.% | 40 Gew.% |
| Bsp.5 | EPDM | EPDM modifiziert mit | EVM |
| | 60 Gew.% | Maleinsäureanhydrid | 30 Gew.% |
| | | 10 Gew.% | |
| Bsp. 6 | EPDM | EPDM modifiziert mit | EVM |
| | 40 Gew.% | Maleinsäureanhydrid | 50 Gew.% |
| | | 10 Gew.% | |
| Bsp. 7 | EPDM | EPDM modifiziert mit | HNBR |
| | 45 Gew.% | Maleinsäureanhydrid | 40 Gew.% |
| | | 15 Gew.% | |
| Bsp.8 | EPDM | EPDM modifiziert mit | EVM |
| | 30 Gew.% | Maleinsäureanhydrid | 30 Gew.% + |
| | | 15 Gew.% | HNBR |
| | | | 20 Gew.% |

Die Herstellung des Gummimaterials in Form des Wischgummiprofils 10 erfolgt vorzugsweise so, dass zunächst eine Mischung einer ersten Gummikomponente mit einer zweiten Gummikomponente erfolgt, wobei die erste Gummikomponente geringerer Polarität zumindest teilweise durch ein funktionalisiertes, polares Derivat ersetzt ist, sodass sich die Polaritäten von erster und zweiter Gummikomponente angleichen. Weiterhin werden Verarbeitungshilfsstoffe und Füllstoffe der Gummimischung zugesetzt und es erfolgt nachfolgend eine Formgebung mittels Spritzguss oder Extrusion. Abschließend folgt ein Härtungs- bzw. Vernetzungsprozess sowie ggf. eine Oberflächenbehandlung des erzeugten Wischgummiprofils 10.

Weitere vorteilhafte Ausführungsformen der vorliegenden Erfindung sind Gegenstand der Patentansprüche.

## Patentansprüche

1. Wischerblatt für Scheibenwischer, bestehend aus einem Gummimaterial, umfassend eine erste Gummikomponente einer ersten Polarität und eine zweite Gummikomponente einer zweiten, größeren Polarität, **dadurch gekennzeichnet, dass** zur Angleichung der ersten und zweiten Polarität die erste Gummikomponente durch ein chemisch funktionalisiertes Derivat zumindest teilweise ersetzt ist.

2. Wischerblatt nach Anspruch 1, **dadurch gekennzeichnet, dass** die erste, zu ersetzende Gummikomponente Naturkautschuk (NR), Butadiengummi (BR), Styrolbutadiengummi (SBR), Isobutyl-Isoprengummi (IIR) und/oder Isoprengummi (IR) ist.

3. Wischerblatt nach Anspruch 2, **dadurch gekennzeichnet, dass** N R zumindest teilweise durch ein epoxidiertens Naturkautschuk (ENR) ersetzt ist, dass IR zumindest teilweise durch ein epoxidiertes IR ersetzt ist, und/oder dass BR, SBR oder IIR durch ein halogeniertes, alkoxiliertes oder ein mit tertiären Aminfunktionen versehenes Derivat ersetzt ist.

4. Wischerblatt nach Anspruch 2, **dadurch gekennzeichnet, dass** BR zumindest teilweise durch ein Copolymer von Butadien mit Acrylnitril und/oder durch Polynorbornen (PNR) ersetzt ist.

5. Wischerblatt nach einem der Ansprüche 2 bis 4, **dadurch gekennzeichnet, dass** die zweite Gummikomponente Chloropren (CR) ist.

6. Wischerblatt nach Anspruch 1, **dadurch gekennzeichnet, dass** die erste, zu ersetzende Gummikomponente ein Ehtylen-Propylen-Dien-Terpolymer (EPDM) oder Ethylen-Propylen Copolymer (EPM) ist

7. Wischerblatt nach Anspruch 6, **dadurch gekennzeichnet, dass** EPDM und/oder EPM durch ein alkoxiliertes oder ein mit tertiären Aminfunktionen oder Nitrilgruppen versehenes Derivat ersetzt ist.

8. Wischerblatt nach Anspruch 6 oder 7, **dadurch gekennzeichnet, dass** die zweite Gummikomponente ein Hydriertes Butadiengummi (HNBR), ein Ethylvinylacetat (EVM), ein Chlorsulfoniertes Polyethylen (CSM) und/oder chloriertes Polyethylen (CM) ist.

9. Wischerblatt nach einem der vorhergehenden Ansprüche, **dadurch gekennzeichnet, dass** die erste Gummikomponente durch ein chemisch nur teilweise funktionalisiertes Derivat ersetzt ist.

10. Wischerblatt nach einem der vorhergehenden Ansprüche, **dadurch gekennzeichnet, dass** dieses ein Kopfteil (12) aufweist, das über einen Umlegesteg (14) mit einem Keil (16) verbunden ist, wobei das Kopfteil (12), der Umlegesteg (14) und/oder der Keil (16) gemäß einem der Ansprüche 1 bis 9 ausgeführt ist.

11. Verfahren zur Herstellung eines Wischerblatts nach einem der Ansprüche 1 bis 9, **dadurch gekennzeichnet, dass** eine erste Gummikomponente einer ersten Polarität und eine zweite Gummisorte einer zweiten, größeren Polarität vorgelegt wird, wobei zur Angleichung der ersten und zweiten Polarität die erste Gummikomponente zumindest teilweise durch ihr chemisch funktionalisiertes Derivat ersetzt ist oder in dieses überführt wird, und dass anschließend eine Vermischung beider Gummikomponenten erfolgt.

## Claims

1. Wiper blade for windshield wipers, composed of a rubber material, encompassing a first rubber component of a first polarity and a second rubber component of a second, greater polarity, **characterized in that**, in order to bring the first polarity closer to the second polarity, the first rubber component has been at least partially replaced with a chemically functionalized derivative.

2. Wiper blade according to Claim 1, **characterized in that** the first rubber component which is to be replaced is natural rubber (NR), butadiene rubber (BR), styrenebutadiene rubber (SBR), isobutyl-isoprene rubber (IIR) and/or isoprene rubber (IR).

3. Wiper blade according to Claim 2, **characterized in that** NR has been replaced at least partially with an epoxidized natural rubber (ENR), that IR has been replaced at least partially with an epoxidized IR, and/or that BR, SBR or IIR has been replaced with a halogenated or alkoxylated derivative or with a derivative provided with tertiary amine functions.

4. Wiper blade according to Claim 2, **characterized in that** BR has been replaced at least partially with a copolymer of butadiene with acrylonitrile and/or with polynorbomene (PNR).

5. Wiper blade according to any of Claims 2 to 4, **characterized in that** the second rubber component is chloroprene (CR).

6. Wiper blade according to Claim 1, **characterized in that** the first rubber component to be replaced is an ethylene-propylene-diene terpolymer (EPDM) or ethylene-propylene copolymer (EPM).

7. Wiper blade according to Claim 6, **characterized in that** EPDM and/or EPM has been replaced with an alkoxylated derivative or with a derivative provided with tertiary amine functions or a derivative provided with nitrile groups.

8. Wiper blade according to Claim 6 or 7, **characterized in that** the second rubber component is a hydrogenated butadiene rubber (HNBR), an ethylene-vinyl acetate (EVM), a chlorosulfonated polyethylene (CSM) and/or chlorinated polyethylene (CM).

9. Wiper blade according to any of the preceding claims, **characterized in that** the first rubber component has been replaced with a derivative that has been only partially chemically functionalized.

10. Wiper blade according to any of the preceding claims, **characterized in that** it has a stock (12) connected by way of a tiltable web (14) to a wedge-shaped section (16), where the stock (12), the tiltable web (14), and/or the wedge-shaped section (16) has been designed according to any of Claims 1 to 9.

11. Process for the production of a wiper blade according to any of Claims 1 to 9, **characterized in that** a first rubber component of a first polarity and a second type of rubber of a second, greater polarity are used as starting material, and, in order to bring the first polarity closer to the second polarity, the first rubber component has been at least partially replaced with its chemically functionalized derivative or is converted into the same, and that mixing of the two rubber components then takes place.

## Revendications

1. Lame d'essuie-glace pour essuie-glace, constituée d'un matériau caoutchoutique, comprenant un premier composant caoutchoutique d'une première polarité et un second composant caoutchoutique d'une seconde polarité supérieure, **caractérisée en ce que** le premier composant caoutchoutique est remplacé au moins en partie par un dérivé fonctionnalisé chimiquement pour l'égalisation de la première et de la seconde polarité.

2. Lame d'essuie-glace selon la revendication 1, **caractérisée en ce que** le premier composant caoutchoutique à remplacer est le caoutchouc naturel (NR), le caoutchouc de butadiène (BR), le caoutchouc de styrène-butadiène (SBR), le caoutchouc d'isobutyl-isoprène (IIR) et/ou le caoutchouc d'isoprène (IR).

3. Lame d'essuie-glace selon la revendication 2, **caractérisée en ce que** le NR est remplacé au moins en partie par un caoutchouc naturel époxydé (ENR), **en ce que** l'IR est remplacé au moins en partie par un IR époxydé et/ou **en ce que** le BR, le SBR ou l'IIR sont remplacés par un dérivé halogéné, alcoxylé ou muni de fonctions amine tertiaires.

4. Lame d'essuie-glace selon la revendication 2, **caractérisée en ce que** le BR est remplacé au moins en partie par un copolymère de butadiène avec de l'acrylonitrile et/ou par du polynorbornène (PNR).

5. Lame d'essuie-glace selon l'une quelconque des revendications 2 à 4, **caractérisée en ce que** le second composant caoutchoutique est le chloroprène (CR).

6. Lame d'essuie-glace selon la revendication 1, **caractérisée en ce que** le premier composant caoutchoutique à remplacer est un terpolymère d'éthylène-propylène-diène (EPDM) ou un copolymère d'éthylène-propylène (EPM).

7. Lame d'essuie-glace selon la revendication 6, **caractérisée en ce que** l'EPDM et/ou l'EPM sont remplacés par un dérivé alcoxylé ou un dérivé muni de fonctions amine tertiaires ou de groupes nitrile.

8. Lame d'essuie-glace selon la revendication 6 ou 7, **caractérisée en ce que** le second composant caoutchoutique est un caoutchouc de butadiène hydrogéné (HNBR), un acétate d'éthyle et de vinyle (EVM), un polyéthylène chlorosulfoné (CSM) et/ou un polyéthylène chloré (CM).

9. Lame d'essuie-glace selon l'une quelconque des revendications précédentes, **caractérisée en ce que** le premier composant caoutchoutique est remplacé par un dérivé fonctionnalisé chimiquement uniquement en partie.

10. Lame d'essuie-glace selon l'une quelconque des revendications précédentes, **caractérisée en ce que** celle-ci comprend une partie de tête (12), qui est reliée par une pièce jointive de renversement (14) avec une partie effilée (16), la partie de tête (12), la pièce jointive de renversement (14) et/ou la partie effilée (16) étant configurées selon l'une quelconque des revendications 1 à 9.

11. Procédé de fabrication d'une lame d'essuie-glace selon l'une quelconque des revendications 1 à 9, **caractérisé en ce qu'**un premier composant caoutchoutique d'une première polarité et un second type de caoutchouc d'une seconde polarité supérieure sont chargés, le premier composant caoutchoutique étant remplacé au moins en partie par son dérivé fonctionnalisé chimiquement ou transformé en celui-ci pour l'égalisation de la première et de la seconde polarité, et **en ce qu'**un mélange des deux composants caoutchoutiques a ensuite lieu.
